Europäisches Patentamt

European Patent Office

Office européen des brevets

(11) Publication number: **0 445 295 A1**

(12) **EUROPEAN PATENT APPLICATION**
published in accordance with Art. 158(3) EPC

(21) Application number: 90912965.2

(22) Date of filing: 04.09.90

(86) International application number:
PCT/JP90/01131

(87) International publication number:
WO 91/04822 (18.04.91 91/09)

(51) Int. Cl.⁵: **B23H 7/10**

(30) Priority: 27.09.89 JP 249214/89

(43) Date of publication of application:
**11.09.91 Bulletin 91/37**

(84) Designated Contracting States:
**CH DE FR GB IT LI**

(71) Applicant: FANUC LTD.
3580, Shibokusa Aza-Komanba Oshinomura
Minamitsuru-gun, Yamanashi 401-05(JP)

(72) Inventor: ASO, Toshiyuki, Room 7-208, FANUC
Manshonharimomi
3539-1, Shibokusa, Oshino-mura
Minamitsuru-gun, Yamanashi 401-05(JP)

Inventor: SAKURAGAWA, Tomonobu, FANUC
Dai-3 Vira-karamatsu
3527-1, Shibokusa, Oshino-mura
Minamitsuru-gun, Yamanashi 401-05(JP)
Inventor: HIGASHI, Izumi, FANUC Dai-3
Vira-karamatsu
3527-1, Shibokusa, Oshino-mura
Minamitsuru-gun, Yamanashi 401-05(JP)

(74) Representative: Billington, Lawrence Emlyn et
al
HASELTINE LAKE & CO Hazlitt House 28
Southampton Buildings Chancery Lane
London WC2A 1AT(GB)

(54) **WIRE GUIDE ASSEMBLY OF ELECTRIC DISCHARGE MACHINE.**

(57) A wire guide assembly of wire cutting electric discharge machine which improves precision in working while preventing variation in wire tension, however, is simple in structure. When the supply of compressed air to an air actuator (60) at the start of discharge cutting subsequent to wire connection is suspended and a plunger (62) of the actuator is energized to the side of the wire guide by a spring (63), a movable guide member (44) is pressed to a stationary guide member (43) by the tip of the plunger and a wire path (50) through which the wire (10) is loosely passed is formed between both guide members. During discharge cutting, the wire is retained in the wire path while spaced apart from both guide members with a gap (b) at a position (a) in which the wire lies nearest both guide members, whereby no slide friction is caused between the wire conveyed along the wire path and guide members. Flowing of processing fluid is expedited and no work chips stay between the wire and guide members. As a result, the wire is free of variation in tension and precision in working is increased.

FIG.3

## Technical Field

The present invention relates to a wire guide assembly of an electric discharge machine, and more particularly, to a wire guide assembly capable of preventing a variation in wire tension to improve the machining precision.

## Background Art

A wire cut electric discharge machine for machining a workpiece by generating discharge between a wire and a workpiece comprises upper and lower wire guides respectively disposed above and below the workpiece, and is so designed as to restrain the wire within wire passages formed in these guides in alignment with a wire feeding path, thereby holding the wire along the wire feeding path. Further, the electric discharge machine includes an automatic wire extension apparatus for inserting the wire, fed from the upper wire guide, into a groove formed in the workpiece to extend therethrough, and into the wire passage of the lower guide, to thereby stretch the wire along the wire feeding path extending between the upper and lower wire guides and extending towards the downstream side from the lower wire guide, when the electric discharge machining is started, for example.

Typically, the lower wire guide is comprised of a three-point supporting guide having a stationary guide member and a movable guide member which is arranged to be movable toward and away from the stationary guide member. This wire guide is operable to slidably support the wire, at three points, between opposed faces of a V-groove formed in the stationary guide member and of the movable guide member, by urging the movable guide member towards the stationary guide member by means of a spring during the electric discharge machining operation. During the wire extension, on the other hand, the lower wire guide operates to drive the movable guide member, by means of an air actuator, in the direction away from the stationary guide member against the spring force, so as to increase the width of the wire passage defined between the guide members, thereby making it easy to insert the wire into the wire passage.

According to the conventional wire guide, however, since the wire is kept in contact with the stationary and movable guide members during the electric discharge machining, sliding resistance occurs between the wire and these guide members, and work scrap tends to remain in the wire guide. The wire tension varies with a variation in the sliding resistance caused by the accumulated work scrap, and adversely affects the machining precision. Thus, in the prior art, the wire guide is detached from the electric discharge machine for cleaning at regular time intervals. However, the maintenance necessitates labor. Further, it is known to provide the air actuator with a mechanism for adjusting the spring force, so as to adjust the pressure applied to the wire by the movable guide member, thereby compensating for a variation in the sliding resistance. In this case, however, the wire guide and actuator becomes complicated in their arrangements.

## Disclosure of the Invention

An object of the present invention is to provide a wire guide assembly of a wire cut electric discharge machine, which is capable of preventing a variation in the wire tension to improve the machining precision, and which is simple in construction.

In order to achieve the above-mentioned object, a wire guide assembly of the present invention comprises a stationary guide member having a wire guide groove formed therein, and a movable guide member which is arranged to be movable toward and away from the stationary guide member. The movable guide member has a wire guide surface facing the wire guide groove. When the movable guide member is brought in contact with the stationary guide member, the wire guide surface cooperates with the wire guide groove to define a wire passage which permits the wire to be loosely inserted therethrough.

As described above, according to the present invention, since the wire passage which permits the wire to be loosely inserted is defined between the wire guide surface of the movable guide member and the wire guide groove of the stationary guide member, a gap is provided between the wire restrained in the wire guide and the movable and stationary guide members of the wire guide, so that the wire is restrained in the wire passage in such a condition that the wire is out of contact with the wire guide. As a result, during the electric discharge machining, no sliding resistance occurs between the wire and the wire guide, and hence the wire tension will not be varied due to a variation in the sliding resistance, thereby making it possible to improve the machining precision. Further, since the work scrap is difficult to stay, it is unnecessary to frequently clean the wire guide. Also, it is not necessary to provide a mechanism for adjusting the pressure applied to the wire by the movable guide member, and thus the construction is simple. Furthermore, the wire guide assembly of the present invention can be obtained, without the need of largely modifying the specification of the conventional three-point supporting type wire guide.

## Brief Description of the Drawings

Fig. 1 is a front view, partly broken, showing a lower wire guide assembly according to one embodiment of the present invention, together with an upper wire guide assembly;

Fig. 2 is a vertical cross sectional view of the lower wire guide assembly of Fig. 1;

Fig. 3 is a horizontal cross sectional view of the lower wire guide taken along line III-III of Fig. 2;

Fig. 4 is a view, similar to Fig. 3, showing by way of example a modification of the lower wire guide; and

Fig. 5 is a horizontal cross sectional view showing a conventional lower wire guide.

## Best Mode of Carrying Out the Invention

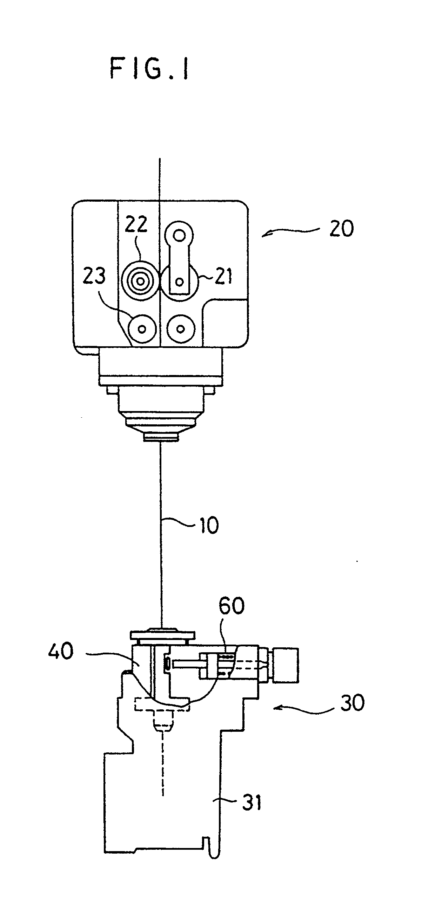

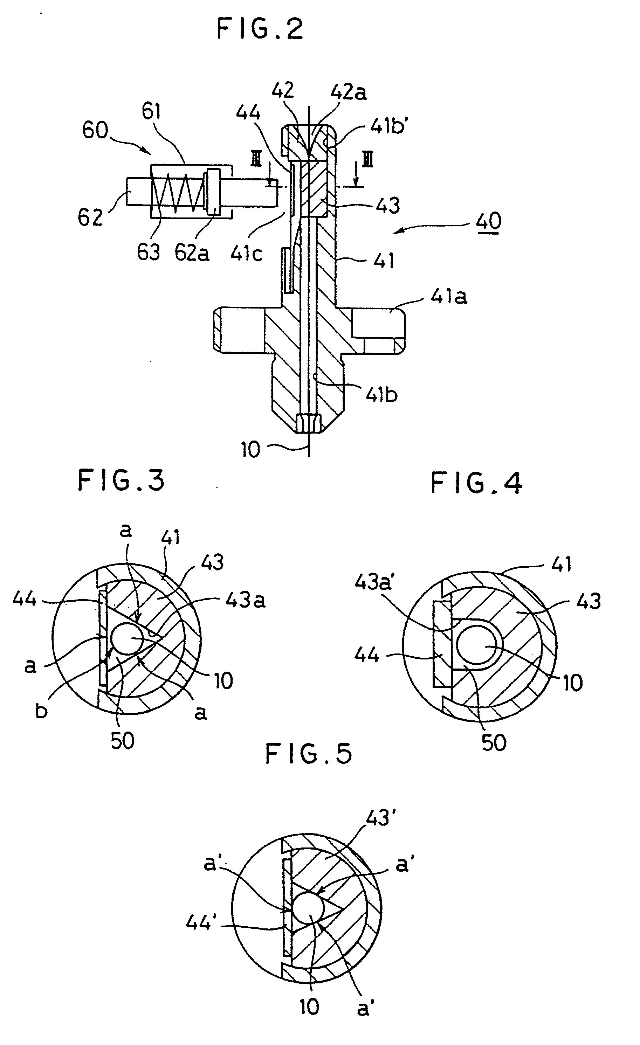

Referring to Figs. 1 and 2, a wire cut discharge machine comprises upper and lower guide assemblies 20, 30 for holding a wire 10 along a wire feeding path. Further, the electric discharge machine comprises a conventionally known automatic wire extension apparatus (not shown) for stretching the wire 10 along the wire feeding path which extends between the assemblies 20, 30 and extends towards the downstream side from the assembly 30, a conventionally known detection device (not shown) for detecting the completion of wire extension, and a conventionally known machining fluid supplying device (not shown). The upper wire guide assembly 20 includes a pinch roller 21 arranged to be movable toward and away from an electrode 22, and a pair of hold rollers 23 arranged to be movable toward and away from each other. This assembly is operable to feed the wire held between the hold rollers 23 towards the lower wire guide assembly 30, and apply machining pulses from an electric discharge machining source (not shown) via the electrode 22 to the wire 10.

The lower wire guide 40 of the lower wire guide assembly 30 includes a guide body 41 removably mounted at its flange portion 41a on a housing 31 of the assembly 30. The guide body 41 is formed with a stepped axial hole 41b extending therethrough along the axis of the guide body. A distal end guide member 42 and a stationary guide member 43 are fixedly fitted in a large-diameter portion 41b' of the axial hole, respectively. The distal end guide member 42 is formed of, e.g., ruby, and a wire guide hole 42a of inverted conical form is formed in alignment with the axial hole 41b. A wire guide groove 43a (Fig. 3) formed into a V-shape as view in horizontal cross section is formed in the stationary guide member 43 in alignment with the axial hole 41b and the wire guide hole 42a. An opening 41c is formed in the peripheral wall of the guide body 41 at a location facing the stationary guide member 43. A movable guide member 44, comprised of, e.g., a leaf spring, is disposed in the opening forming portion of the guide body 41, in such a manner that a free distal end of the movable guide member 44 having a proximal end thereof fixed on the guide body 41 is movable toward and away from the stationary guide member 43.

As shown in Fig. 3, the movable guide member 44 cooperates with the stationary guide member 43 to define a wire passage 50 which is formed into a triangular shape in horizontal cross section and which permits the wire 10 to loosely pass therethrough, when the movable guide member is brought into contact with the stationary guide member. That is, the V-groove 43a of the stationary guide member is formed into such a cross-sectional shape that provides a gap b of a predetermined distance between the wire 10 and the guide members 43, 44 at those three circumferential positions a around the wire at which the wire 10, loosely inserted in the wire passage 50, is positioned at locations closest to the guide members 43, 44. For example, the V-groove 43a is formed in a manner providing the gap b of, preferably, 5 to 10 $\mu$m in case that the wire 10 having a diameter of 0.2 to 0.25 mm is used.

Referring to Fig. 2 again, the lower wire guide assembly 30 has an air actuator 60 for driving the movable guide member 44 in the directions toward and away from the stationary guide member 43. The actuator 60 includes a cylinder 61, a plunger 62 having a piston 61a integrally formed therewith, and a spring 63. The actuator is so designed as to always urge the plunger 62, having a distal end arranged for contact with the movable guide member 44, towards the movable guide member by means of the spring 63, and supply pressurized air into a cylinder chamber at the movable guide member side with respect to the piston 62a to thereby drive the plunger 62 in the direction away from the movable guide member 44 against the spring force of the spring 63.

Next, operations of the upper and lower wire guide assemblies 30, 40 will be explained.

For example, upon start of electric discharge machining, the wire 10 is stretched along the wire feeding path by the automatic wire extension apparatus of the electric discharge machine in a conventional manner. At the time of wire extension, pressurized air is supplied into the cylinder chamber of the air actuator 60 of the lower wire guide assembly 30, so that the plunger 62 is driven in the direction away from the lower wire guide 40 against the spring force of the spring 63, to cause the distal end of the plunger to move away from the free distal end of the movable guide member 44. As a result, the free distal end of the movable guide member 44 formed of a leaf spring is separated from the opposite end face of the stationary guide member 43, so that the width of the wire passage 50 defined by the guide members 43, 44 is substantially increased.

During the wire extension, the wire 10, which is delivered from the upper wire guide assembly 20 with rotation of the hold roller 23 of the assembly 20, and is then inserted into the machining starting hole formed in a workpiece (not shown), is inserted into the wire guide hole 42a of the distal end guide member 42 and is then permitted to be easily inserted into the wire passage 50 communicated with the wire guide hole 42a and expanded as described above. The wire 10 is further delivered towards the downstream side through the axial hole 41b of the guide body 41 communicated with the wire passage 50.

When the completion of the wire extension is detected in a conventional manner, the supply of pressurized air to the air actuator 60 is interrupted, so that the plunger 62 is urged towards the lower wire guide 40 by means of the spring 63. As a result, the distal end of the plunger is pressed against the free distal end of the movable guide member 44 which is in turn pressed against the opposite end face of the stationary guide member 43, so that the wire passage 50 with a triangular cross-section is defined by the guide members 43, 44. The wire 10 held within the wire passage 50 is disposed on the axis of the passage, while applied with tension, so that the wire is restrained within the wire passage 50 in such a state that the gap b of, e.g., 5 to 10 μm is provided between the wire 10 and the guide members 43, 44 at those three circumferential positions a around the wire at which the wire 10 is positioned nearest to the guide members 43, 44.

During the electric discharge machining after the wire extension, the wire 10 is delivered along the wire feeding path, comprised of the wire guide hole 42a, the wire passage 50 and the axial hole 41b, and pressurized machining fluid is supplied and injected towards a workpiece from the upper and lower wire guide assemblies 20, 30 in a conventional manner, so that the interior of the wire passage 50, etc., is filled with the machining fluid. Normally, a uniform machining fluid pressure is applied to the wire 10 in the direction radially of the wire, and the wire 10 is held along the axis of the wire passage 50 with the gap b provided between the wire and the stationary and movable guide members 43, 44. A filmy layer of the machining fluid is formed in the gap b, so that the wire 10 is prevented from being displaced from the axis of the wire passage. Since the wire 10 is held to be out of contact with the guide members 43, 44 in this manner, no sliding resistance occurs between the wire 10 delivered along the wire feeding path and the guide members 43, 44, unlike the conventional wire guide in which the wire 10 is held at three points a' by means of elements 43' and 44' corresponding to the guide members.

Further, unlike the conventional wire guide in which the sliding resistance as well as the wire tension can vary due to the presence of accumulated work scrap in the wire guide, according to the present embodiment in which the wire 10 is kept out of contact with the guide members 43, 44 to thereby enhance the flow of machining fluid, work scrap will not stay between the wire guide 10 and the guide members 43, 44, so that a variation in the wire tension and degradation of machining precision due to the presence of the remaining work scrap will not occur. In the conventional wire guide designed to adjust the spring force applied to the wire 10 via the movable guide member 44' in a manner permitting the the wire to be brought in contact with the guide members 43', 44' at three points, a force applied to the wire can vary when the spring force has varied by an influence of the machining fluid, whereby the contact resistance between the wire and the guide members, i.e., the wire tension can vary. Contrary to this, according to the present embodiment designed to press the movable guide member 44 against the stationary guide member 43 instead of pressing the wire 10 via the movable guide member 44, it is possible to set the spring force of the spring 63 to a value large enough to be free from the influence of the machining fluid. Thus, the wire tension will not vary by the influence of the machining fluid, thereby improving the machining precision.

The present invention is not limited to the abovementioned embodiment, and may be modified in various ways.

For example, although the V-shaped groove 43a is formed in the stationary guide member 43 in the embodiment, a wire guide groove 43a' shaped into a U-shape as viewed in horizontal cross section may be formed, as shown in Fig. 4.

## Claims

1. A wire guide assembly, comprising:
   a stationary guide member having a wire guide groove formed therein; and
   a movable guide member arranged to be movable toward and away from said stationary guide member and having a wire guide surface facing said wire guide groove, said wire guide surface being operable to cooperates with said wire guide groove to define a wire passage which permits a wire to be loosely inserted therethrough when said movable guide member is brought in contact with said stationary guide member.

2. A wire guide assembly according to claim 1, wherein said stationary guide member is formed as having a horizontal cross-sectional shape which provides a gap of a predetermined distance, varying in dependence on a diameter of the wire, between the wire inserted in said wire passage and said wire guide members at those positions at which the wire is disposed nearest to said guide members.

3. A wire guide assembly according to claim 1, further including:
   driving means for driving said movable guide member in directions toward and away from said stationary guide member.

# F I G . I

FIG.2

FIG.3

FIG.4

FIG.5

# INTERNATIONAL SEARCH REPORT

International Application No PCT/JP90/01131

## I. CLASSIFICATION OF SUBJECT MATTER (if several classification symbols apply, indicate all) 6

According to International Patent Classification (IPC) or to both National Classification and IPC

Int. Cl$^5$    B23H7/10

## II. FIELDS SEARCHED

### Minimum Documentation Searched 7

| Classification System | Classification Symbols |
|---|---|
| IPC | B23H7/10 |

### Documentation Searched other than Minimum Documentation to the Extent that such Documents are Included in the Fields Searched 8

| | |
|---|---|
| Jitsuyo Shinan Koho | 1926 – 1990 |
| Kokai Jitsuyo Shinan Koho | 1971 – 1990 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | JP, U, 59-156735 (Hitachi Seiko K.K.), 20 October 1984 (20. 10. 84), Claim and Brief Description of Drawings, Figs. 4, 5, (Family: none) | 1 – 3 |
| Y | JP, A, 62-181833 (Hitachi Seiko K.K.), 10 August 1987 (10. 08. 87), Lines 4 to 9, lower left column, page 2, Figs. 4, 5, (Family: none) | 3 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| November 22, 1990 (22. 11. 90) | December 10, 1990 (10. 12. 90) |
| International Searching Authority | Signature of Authorized Officer |
| Japanese Patent Office | |

Form PCT/ISA/210 (second sheet) (January 1985)